# EUROPÄISCHE PATENTSCHRIFT

(11) **EP 3 013 648 B1**
(45) Veröffentlichungstag und Bekanntmachung des Hinweises auf die Patenterteilung: **28.03.2018**
(21) Anmeldenummer: 14735847.7
(22) Anmeldetag: 18.06.2014
(51) Int. Cl.: B60R 13/10

(54) **VERFAHREN ZUM HERSTELLEN EINES KENNZEICHENS UND KENNZEICHEN**
METHOD FOR PRODUCING AN IDENTIFIER AND IDENTIFIER
PROCÉDÉ DE FABRICATION D'UNE PLAQUE D'IMMATRICULATION ET PLAQUE D'IMMATRICULATION

(30) Priorität: 28.06.2013 DE 102013106805; 09.09.2013 DE 102013109850
(43) Veröffentlichungstag der Anmeldung: 04.05.2016
(73) Patentinhaber: Tönjes, Piet, 27751 Delmenhorst (DE)
(72) Erfinder: Tönjes, Piet, 27751 Delmenhorst (DE)
(74) Vertreter: Möller, Friedrich
(86) Internationale Anmeldenummer: PCT/EP2014/001658
(87) Internationale Veröffentlichungsnummer: WO 2014/206540

(56) Entgegenhaltungen:
- DE-A1- 10 226 718
- DE-U1-202010 014 614

## Beschreibung

Die Erfindung betrifft ein Verfahren zum Herstellen eines Kennzeichens, vorzugsweise Fahrzeugkennzeichens gemäß dem Oberbegriff des Anspruchs 1. Kennzeichen dienen zu vielfältigen Hinweis- und/oder Identifikationszwecken. Fahrzeugkennzeichen werden zur Identifikation von Fahrzeugen, insbesondere Kraftfahrzeugen, eingesetzt. Dazu ist eine Beschriftung in Form von Symbolen auf eine Grundplatte des Kennzeichens aufgebracht. Die Symbole dienen als Identifizierungsmerkmal. Dazu ist in der Regel eine Reihe von Symbolen vorgesehen, die für einen menschlichen Betrachter lesbar sind, typischerweise eine Kombination von Ziffern und/oder Buchstaben, gegebenenfalls auch Sonderzeichen.

Kennzeichen, und zwar vor allem Fahrzeugkennzeichen, sind in der Regel als profilierte Kennzeichen ausgebildet. Es werden dazu aus der Grundplattenebene herausragende Symbole vorgesehen. Sie sind insbesondere als auf der einen und/oder anderen Fläche der Grundplatte erhabene und/oder vertiefte Elemente ausgebildet. Dies wird beispielsweise durch Umformung, insbesondere Prägung, erreicht, alternativ auch durch Aufkleben oder Aufbringen der Symbole auf andere Weise.

Im Falle einer Prägung werden die Symbole bisher entweder vor dem Prägevorgang mit einer Farbe oder einem Farbstoff auf die Grundplatte aufgebracht oder die hervorstehenden Bereiche werden nach Prägung mittels einer ebenen Farbwalze flächig bedruckt. Die Aufbringung der Farbe erfolgt üblicherweise im Siebdruckverfahren, mittels Lackierwalzen oder im Heißprägeverfahren mittels Walzen oder Stempeln.

Diese bekannten Vorgehensweisen zeichnen sich durch verschiedene Nachteile aus. Bei einer Bedruckung vor der Prägung kommt es zu unsauberen und verzerrten Ausbildung der Prägekanten. Ein Einfärben nach der Prägung führt ebenfalls zu einem unsauberen Ergebnis, insbesondere im randseitigen Bereich. Bei häufig auftretenden, unsauberen Ergebnissen des Prägevorganges führen kleine Vertiefungen oder ähnliches zu einem lückenhaften Farbauftrag. Nachteilig ist auch die Einfärbung mittels eines Siebdrucks, weil die Maschine und ihr Betrieb kostenaufwändig sind. Außerdem handelt es sich um Verfahren, die einen direkten mechanischen und damit verschleißbehafteten Kontakt mit dem Kennzeichen erfordern. Ebenfalls als nachteilig hat sich die Bedruckung mittels eines 3D-Druckverfahrens gemäß der Offenbarung DE 20 2010 014614 U erwiesen, die ein Verfahren gemäß dem Oberbegriff des Anspruchs 1 offenbart. Insbesondere für die Beschriftung von Kennzeichen und besonders für Fahrzeugkennzeichen ist es wichtig, dass die Bedruckung mit der Prägung zusammenfällt, um ein beschriftetes Kennzeichen einfach und schnell erkennen zu können.

Der Erfindung liegt nunmehr die Aufgabe zugrunde, ein Verfahren zur Herstellung beziehungsweise Beschriftung eines Kennzeichens zu schaffen, das die beschriebenen Nachteile des Standes der Technik beseitigt. Insbesondere sollen einerseits unsaubere Ergebnisse bei der Verwendung von Farbwalze oder Siebdruckverfahren und andererseits hoher apparativer beziehungsweise energetischer Aufwand insbesondere bei der Verwendung von Heißprägewalzen vermieden werden.

Ein Verfahren mit den Maßnahmen des Anspruchs 1 löst diese Aufgabe. Demnach wird das wenigstens eine Symbol und/oder gegebenenfalls ein Farbauftrag auf das wenigstens eine Symbol eines Kennzeichens, insbesondere Fahrzeugkennzeichens, aufgebracht. Das Symbol beziehungsweise der Farbauftrag wird aus wenigstens einer Farbportion und/oder wenigstens einer Materialportion gebildet. Dies kann vorzugsweise teilweise und/oder vollständig erfolgen. Dies hat den Vorteil, dass statt eines flächigen Auftrags ein gezielter Auftrag von Farbe auf die relevanten Bereiche wie beispielsweise die aus der Grundplatte herausragenden Symbole, erfolgen kann. Auch die Symbole selber können auf diese Weise gefertigt werden. Durch ein kleinteiliges Auftragen von Farbe beziehungsweise Farbstoff und/oder Material können außerdem Unebenheiten ausgeglichen und Randbereiche mit einem sauberen Farbauftrag versehen werden. Die Farbe beziehungsweise das Material kann dazu insbesondere in kleine Einheiten beziehungsweise Portionen aufgeteilt und so aufgebracht werden. Es handelt sich insbesondere um ein berührungsloses Verfahren. Weiter wird die Topographie des Kennzeichens beziehungsweise des wenigstens einen Symbols ermittelt. Diese Ermittlung erfolgt dabei, um dort einen gezielten Farbauftrag abhängig von der Topographie zu ermöglichen. Der Farbauftrag erfolgt nach Ermittlung oder auch während der Ermittlung der Topographie des Kennzeichens, insbesondere nach einer erst teilweisen Ermittlung. Das Kennzeichen beziehungsweise das wenigstens eine Symbol wird zur Ermittlung der Topographie mittels einer Abtastvorrichtung abgetastet.

Die Farbe beziehungsweise der Farbauftrag und/oder das Material wird insbesondere aus einer Vielzahl kleiner Portionen, insbesondere Farbportionen und/oder Materialportionen gebildet. Auch kann hierzu ein kontinuierlicher Materialstrahl verwendet werden, vorzugsweise als Materialportion. Das Material kann demnach insbesondere kontinuierlich zugeführt und/oder aufgebracht werden, zumindest im Wesentlichen kontinuierlich.

Bevorzugt wird die Farbe in zumindest nahezu punktförmigen Farbportionen aufgetragen. Bei den Farbportionen handelt es sich vorzugsweise um Farbpunkte und/oder Farbspritzer und/oder Farbstrahlen, gegebenenfalls auch um Materialportionen. Die Farbportionen können beispielsweise einzeln punktweise aufgetragen werden. Alternativ kann aber auch eine streifenweise Aufbringung erfolgen. Dies kann beispielsweise in Form einer durchgängigen Linie oder auch einer Reihe nebeneinander platzierter Farbportionen geschehen. Weiter bevorzugt kann eine matrixweise beziehungsweise punktmatrixweise Aufbringung vorgesehen sein, also vorzugsweise in Form eines zweidimensionalen Bereichs. Auch andere Aufbringungsarten sind möglich. Die Abmessungen, insbesondere Durchmesser oder Querschnittsmaße einzelner Farbportionen, liegen vorzugsweise im Bereich von einigen zehn oder hundert Nanometern bis zu einigen Millimetern, vorzugsweise im Bereich von einigen Mikrometern bis zu einem Millimeter. Bevorzugt liegen die Größen oder Abmessungen typischerweise im Bereich von einigen bis zu einigen zehn Nanometern. Materialportionen haben typischerweise etwa größere Abmessungen, vorzugsweise im Bereich von einigen zehn bis hundert Mikrometern bis hin zu einigen oder einigen zehn Millimetern.

Die wenigstens eine Farbe wird durch wenigstens eine Farbauftragsvorrichtung beziehungsweise wenigstens ein Farbauftragselement aufgebracht. Es kann sich insbesondere auch um wenigstens eine Substanz handeln, die erst mit oder bei Auftragen auf die Oberfläche reagiert und so eine Farbänderung hervorruft. Es können auch mehrere, insbesondere verschiedene Farben vorgesehen sein. Vorzugsweise sind mehrere Farbauftragselemente, weiter bevorzugt eine Vielzahl Farbauftragselemente vorgesehen. Diese Farbauftragselemente können gleichzeitig oder nacheinander angesteuert werden. Vorzugsweise sind die Farbauftragselemente in wenigstens einer Reihe, einer Matrix und/oder einem Feld beziehungsweise Array angeordnet. Damit lassen sich größere Flächen als einzelne Punkte gleichzeitig mit Farbe versehen. Das wenigstens eine Farbauftragselement ist insbesondere als Farbdüse, Farbnadel, Heizelement, Farbstempel, Druckelement, Elektrofotographieelement oder ähnlich ausgebildet. Damit lassen sich insbesondere einzelne Farbportionen in entsprechender Weise abgeben. Der Farbauftrag erfolgt vorzugsweise durch Auftragen, Besprühen, Bedrucken, Bestrahlen, Betropfen und/oder Bekleben.

Besonders bevorzugt erfolgt der Farbauftrag nach dem Ermitteln der Topographie, da dann auf einfache Weise über die mit Farbe zu versehenden Bereiche entschieden werden kann. Besonders bevorzugt können zunächst Teilbereiche der Topographie des Kennzeichens ermittelt werden, um so gleichzeitig mit dem Aufragen der Farbe zu beginnen. Somit kann ein kontinuierlicher Vorgang des Ermittelns der Topographie und sich direkt anschließendem Farbauftrag vorgesehen sein.
Die Topographie des wenigstens einen Symbols wird vorzugsweise durch Berechnung ermittelt. Dazu werden vorzugsweise gespeicherte und/oder gemessene Symboldaten zugrundegelegt. Besonders bevorzugt werden Symboldaten verwendet, die beispielsweise aus einem Herstellungsvorgangs des Kennzeichens, wie insbesondere einem Prägevorgang oder Schneidevorgang, bekannt sind. Zum Prägen oder auch Aufbringen der Symbole auf das eigentliche Kennzeichen muss die Form der Symbole bekannt sein. Diese kann gespeichert und/oder vermessen werden, um diese dann anschließend mit einem entsprechenden Farbauftrag versehen zu können.

Weiter bevorzugt wird das Kennzeichen mittels wenigstens eines Anschlagsmittels relativ zur Farbauftragsvorrichtung positioniert und/oder ausgerichtet. Das Anschlagmittel kann damit als fester Bezugspunkt auf einer Unterlage dienen. Als Anschlagmittel können beispielsweise entsprechende mechanische oder optische, gegebenenfalls auch visuelle Führungen oder ähnliches dienen. An diese wird das Kennzeichen mit seinen Seitenkanten angelegt beziehungsweise an denen wird es ausgerichtet. Ausgehend von dieser definierten Position kann eine entsprechende Topographieermittlung beziehungsweise ein Farbauftrag vorgenommen werden, wobei die Startbedingungen festgelegt sind. Aufgrund der bekannten Abmessungen der Prägewerkzeuge kann im Vorfeld eine Berechnung insbesondere statt einer Messung der Symbolposition erfolgen.

Bei der Abtastvorrichtung zum Abtasten des Kennzeichens beziehungsweise des wenigstens einen Symbols zur Ermittlung der Topographie kann es sich um eine mechanische und/oder optische und/oder akustische und/oder elektrische Abtastvorrichtung handeln. Bevorzugt eignen sich dazu beispielsweise Kameras, Laserscanner, Ultraschallmessgeräte, Mikrowellenmessgeräte, Distanz-, Profil- und Höhenmessgeräte und/oder auch mechanische Tastköpfe. Verschiedene Verfahren lassen sich gegebenenfalls auch geeignet kombinieren. Im Ergebnis wird die Topographie des Kennzeichens beziehungsweise des wenigstens einen zugeordneten Symbols ermittelt. Gegebenenfalls beinhaltet die Ermittlung eine Berechnung der Topographie mittels eines Computers, sofern keine rein mechanische Abtastung und Steuerung erfolgt.

Vorzugsweise erfolgt das Abtasten und der Farbauftrag auf derselben Seite beziehungsweise Fläche des Kennzeichens. Alternativ können das Abtasten und der Farbauftrag auf verschiedenen Seiten des Kennzeichens erfolgen. Dies bedeutet, dass beispielsweise eine Abtastvorrichtung eine Unterseite des Kennzeichen abtastet, während auf der Oberseite ein Farbauftrag erfolgt. Dieses Verfahren eignet sich insbesondere bei mechanischen Abtastvorrichtungen. Im Normalfall kann das Abtasten auch von derselben Seite wie das anschließende Aufbringen der Farbe erfolgen. Ein Arbeiten von verschiedenen Seiten des Kennzeichens bietet den Vorteil, dass gleichzeitig zum Abtasten ein Aufbringen der Farbe erfolgen kann. Dabei stören sich die Abtastvorrichtung und der Vorgang des Farbauftragens nicht gegenseitig. Alternativ kann ein vollständiges beziehungsweise vollflächiges oder teilflächiges Einlesen der Topographie erfolgen, vorzugsweise mit einer feststehenden Abtastvorrichtung. Auch ein vollflächiges oder teilflächiges Aufbringen der Farbe kann erfolgen, insbesondere mittels einer insbesondere feststehenden vorzugsweise voll- oder teilflächig arbeitenden Auftragsvorrichtung, wobei vorzugsweise ein Teilbereich oder mehrere Teilbereiche jeweils in einem Schritt mit Farbe versehen werden.

Besonders bevorzugt wird die Farbe nur lokal auf ausgewählte Bereiche der Symbole aufgebracht. Vorzugsweise erfolgt dieses Aufbringen lediglich auf gegenüber der Grundplattenebene herausragende, vorzugsweise erhabene und/oder zurückspringende Bereiche der Symbole. Die Auswahl der mit Farbe zu versehenen Bereiche wird anhand der ermittelten Topographiedaten vorgenommen. Somit ist eine gezielte Bedruckung nur der relevanten Teile der Symbole möglich.

Freie Bereiche und/oder Aussparungen im Kennzeichen werden bei der Ermittlung der Topographie vorzugsweise ermittelt und/oder erkannt. Eine solche Erkennung beziehungsweise Ermittlung setzt die Implementierung entsprechender Regeln beziehungsweise der Programmierung entsprechender Merkmale solcher Elemente voraus. Als freie Bereiche werden beispielsweise Flächenabschnitte des Kennzeichens angesehen, die sich aufgrund der Abmessungen zum Beispiel zum Aufbringen weiterer insbesondere flacher Elemente eignen. Beispielsweise können Strich- oder Punktcodes oder auch Embleme, Plaketten und ähnliches in solchen Bereichen aufgebracht werden. Diese können beispielsweise aufgeklebt oder auf andere Weise aufgebracht werden. Ebenso können sie in Form von Farbe und/oder Material aufgebracht werden. Aussparungen, also Ausschnitte im Kennzeichen können beispielsweise zur Aufnahme elektronischer Schaltkreise oder Chips, insbesondere spezieller Funkchips wie zum Beispiel RFID-Chips dienen. Ebenso können speziell geformte Vertiefungen für diese Zwecke verwendet werden, wie auch Aussparungen beispielsweise als Antennen, insbesondere als Schlitzantennen für Funkchips oder ähnliches dienen können. Außerdem können randseitige Aufkantungen oder Erhöhungen mehr oder weniger umlaufend vorhanden sein, wie es beispielsweise bei in Deutschland üblichen Kraftfahrzeugschildern üblich ist. Eine Bedruckung kann mit dem vorliegenden Verfahren auf einfache Weise erfolgen. Der umlaufende Rand kann erkannt und gegebenenfalls beim Farbauftrag ausgespart werden.

Bevorzugt wird/werden die Farbauftragsvorrichtung und/oder die Abtastvorrichtung relativ zum Kennzeichen bewegt, um damit eine Topographieermittlung und/oder einen Farbauftrag zu ermöglichen. Die Farbauftragsvorrichtung oder kurz Auftragsvorrichtung weist wenigstens ein Farbauftragselement auf, insbesondere einen Farbkopf. Die Abtastvorrichtung dient zur Ermittlung der Topographie. Insbesondere erfolgt eine Bewegung des Kennzeichens relativ zu einer insbesondere feststehenden Topographieermittlungs- und/oder Farbauftragsvorrichtung, eine Bewegung der Vorrichtungen relativ zum Kennzeichen oder eine Kombination derselben. Diese sind vorzugsweise teilbeweglich und/oder feststehend.

Es können grundsätzlich alle Arten von Farbe verwendet werden, insbesondere sowohl lösungsmittelhaltige als auch lösungsmittelfreie Farben, ebenso wie schmelzbare Farbstoffe. Typischerweise müssen lösungsmittelfreie Farben ausgehärtet werden, insbesondere durch physikalische oder chemische Reaktionen. Demnach wird bevorzugt eine aushärtbare Farbe mittels eines Aushärtevorgangs ausgehärtet. Hierzu kann vorzugsweise eine Bestrahlung, insbesondere eine UV-Bestrahlung und/oder eine Beheizung nach dem Auftragen der Farbe angewendet werden. Es kann auch eine chemische Reaktion zwischen mehreren Substanzen und/oder wenigstens einer Substanz mit der Schildoberfläche zum Aushärten genutzt werden. Bevorzugt wird die Grundplatte und/oder das wenigstens eine Symbol durch mehrdimensionalen Materialauftrag hergestellt. Es kann insbesondere ein sogenanntes dreidimensionales Druckverfahren beziehungsweise 3D-Druckverfahren angewendet werden. Dabei wird vorzugsweise eine Aufbringung beziehungsweise Ausformung eines mehrdimensionalen Objektes durch Aufbringen von Material und/oder durch Entfernen von Material vorgenommen. Das Material wird mittels wenigstens eines Druckkopfes, einer Düse, eines Schmelzkopfes und/oder auf ähnliche Weise aufgebracht beziehungsweise entfernt. Dabei erfolgt eine dreidimensionale Steuerung der Position der Materialaufbringung, insbesondere mittels eines dreidimensionalen Verschiebesystems. Bevorzugt ist eine Computersteuerung des Verschiebesystems und/oder der Materialbearbeitung beziehungsweise des Materialauftrags vorgesehen. Die hier beschriebenen Lösungen können insbesondere auch mit den Maßnahmen des vorstehend beschriebenen Verfahrens kombiniert werden.
Vorzugsweise erfolgt der Materialauftrag kontinuierlich, besonders bevorzugt in Form eines Materialstrahls, als Farb- und/oder Materialportion. Der Materialauftrag kann aber auch portionsweise, insbesondere punktweise, erfolgen. Eine lokale Verarbeitung des Materials wird durchgeführt, um eine zielgerichtete und genaue Erstellung der Symbole zu ermöglichen. Das Material wird hierzu punkt- und/oder bereichsweise an den gewünschten Stellen deponiert.
Weiter bevorzugt wird das wenigstens eine Symbol zumindest bereichs- und/oder teilweise aus Material, vorzugsweise Kunststoffmaterial, wenigstens einer anderen Farbe hergestellt als ein weiterer Teil und/oder Bereich des wenigstens einen Symbols. Besonders bevorzugt erfolgt die Materialaufbringung beziehungsweise Materialdeposition schichtweise, wobei bevorzugt in der Schicht eine punktweise oder strahlförmige Bearbeitung erfolgt. Eine andere Farbe und/oder anderes Material wird dazu zumindest im Bereich wenigstens einer Schicht des wenigstens einen Symbols aufgebracht, vorzugsweise dessen oberster Schicht. Dabei können auch bereichsweise innerhalb einer Schicht beziehungsweise von Schicht zu Schicht unterschiedliche Farben und/oder Materialien verwendet werden.
Bei einem Kennzeichen mit aus einer Grundplattenebene herausragenden, insbesondere erhabenen und/oder vertieften Symbolen wird gegebenenfalls wenigstens eine Farbe beziehungsweise ein Farbstoff als Farbauftrag auf das wenigstens eine Symbol aufgebracht. Das Kennzeichen zeichnet sich dadurch aus, dass das Symbol selber und/oder der Farbauftrag auf dem wenigstens einen Symbol aus wenigstens einer Farbportion und/oder Materialportion zusammengesetzt ist. Dies bietet den Vorteil, dass ein gezieltes Aufbringen der Farbe auf die farblich gegenüber der Umgebung abzusetzenden Bereiche des Kennzeichens möglich ist. Insbesondere können damit Unregelmäßigkeiten, beispielsweise durch den Prägevorgang, oder auch unsaubere Randeffekte vermieden werden. Bei vertieften Symbolen wird somit überhaupt eine nachträgliche Bedruckung in hinreichender Qualität und sauberer Form überhaupt möglich. Auch kann das Symbol selber teilweise oder vollständig durch Materialauftrag hergestellt sein.

Vorzugsweise wird eine Vielzahl kleiner Farbportionen und/oder Materialportionen und/oder wenigstens ein kontinuierlicher Materialstrahl als Materialportion aufgebracht. Die Zusammensetzung aus einzelnen Farbportionen und/oder Materialportionen ist in der Regel zwar nicht visuell erkennbar, jedoch typischerweise zumindest nachweisbar. Ein kontinuierlicher Materialstrahl bietet insbesondere den Vorteil des gleichmäßigen Auftrags.

Die Farbe ist lediglich auf die gegenüber der Grundplattenebene hervorragenden, insbesondere erhabenen und/oder vertieften Symbole aufgebracht. Vorzugsweise sind zumindest nahezu punktförmige oder linienförmige Farbportionen, weiter vorzugsweise einzelne Punkte oder Linien vorgesehen. Insbesondere können Farbpunkte und/oder Farbspritzer und/oder Farbstrahlen oder Materialstrahlen verwendet werden. Die Farbportionen sind besonders bevorzugt abschnittsweise auf das Kennzeichen beziehungsweise die dort vorgesehenen Symbole aufgebracht. Das Aufbringen erfolgt bevorzugt punktweise und/oder linienweise und/oder streifenweise und/oder matrixweise und/oder bereichsweise. In einer bevorzugten Ausführung der Erfindung ist der Farbauftrag den tatsächlich ermittelten Topographiedaten entsprechend aufgebracht. Damit werden die ermittelten Daten verwendet, um damit eine saubere Aufbringung der Farbe zu erreichen.

Besonders bevorzugt wird die Farbe entsprechend gespeicherten und/oder den tatsächlich ermittelten Topographiedaten aufgebracht. Dies erfolgt vorzugsweise in Kombination mit einem zuvor festgelegten Muster und/oder zuvor festgelegten Schema. Damit erfolgt ein gezielter Auftrag.

Das Kennzeichen ist insbesondere hergestellt gemäß den oben beschriebenen Verfahren. Es zeichnet sich dadurch aus, dass das wenigstens eine Symbol und/oder die Grundplatte zumindest teilweise durch portionsweisen und/oder kontinuierlichen mehrdimensionalen Materialauftrag hergestellt ist. Bevorzugt oder alternativ kann es zumindest teilweise aus unterschiedlichen Materialien und/oder unterschiedlich eingefärbten Materialien hergestellt sein. Dazu kann vorzugsweise ein Verfahren zum lokalen mehrdimensionalen Materialauftrag, insbesondere ein sogenanntes 3D-Druckverfahren, Anwendung finden, wie es beispielsweise weiter oben beschrieben ist. Das wenigstens eine Symbol und/oder die Grundplatte können teilweise oder auch abschnittsweise aus demselben und/oder unterschiedlichen Materialien gefertigt sein. Gegebenenfalls kann auch zusätzlich noch ein Farbauftrag erfolgen, insbesondere auf das wenigstens eine Symbol.

Weiter bevorzugt erfolgt ein schichtweiser Auftrag des unterschiedlichen Material und/oder zumindest verschiedenfarbigen Materials. Insbesondere ist eine äußere beziehungsweise obere Schicht des wenigstens einen Symbols und/oder der Grundplatte aus einen anderen und/oder andersfarbigen Material gebildet, hergestellt und/oder aufgebracht. Insbesondere können verschiedene Farben nacheinander aufgetragen werden. Bevorzugt sind die Symbole aus dem Material und/oder den Farben der Grundplatte hergestellt. Insbesondere ist eine obere Schicht aus andersfarbigem Material als die Grundplatte gebildet.

Ein bevorzugtes Ausführungsbeispiel der Erfindung wird im Folgenden anhand der Figuren der Zeichnung näher beschrieben. Darin zeigen:
Fig. 1 Ein profiliertes Kennzeichen mit aus der Grundplattenebene herausragenden Symbolen,
Fig. 2 mehrere Schnittansichten des Kennzeichens gemäß Fig. 1,
Fig. 3 das Kennzeichen wie in der Fig. 1 während der Topographieermittlung und Farbaufbringung,
Fig. 4 einen Querschnitt des Kennzeichens der Fig. 3 in einem Bereich mit aufgebrachter Farbe, und
Fig. 5 einen Querschnitt eines Symbols während des Farbauftrags.

Ein Kennzeichen 10, insbesondere ein Fahrzeugkennzeichen, dient zur eindeutigen Kennzeichnung und Identifikation eines hier nicht dargestellten Fahrzeugs. Das Kennzeichen 10 weist eine Grundplatte 12 auf, die im dargestellten Ausführungsbeispiel eine im Wesentlichen rechteckige Grundfläche mit einem umlaufenden Rand 14 und abgerundeten Eckbereichen 16 zeigt. In dieser Ausbildung kann das Kennzeichen 10 auch als sogenanntes "Schild" oder "Kennzeichenschild" bezeichnet werden.

Als Material der Grundplatte 12 wird häufig ein metallischer Werkstoff, insbesondere Blech verwendet. Im Ausführungsbeispiel wird eine Grundplatte 12 aus Blech verwendet. Es können aber auch andere geeignete Werkstoffe, wie insbesondere Kunststoffe, Pappe oder ähnliches verwendet werden.

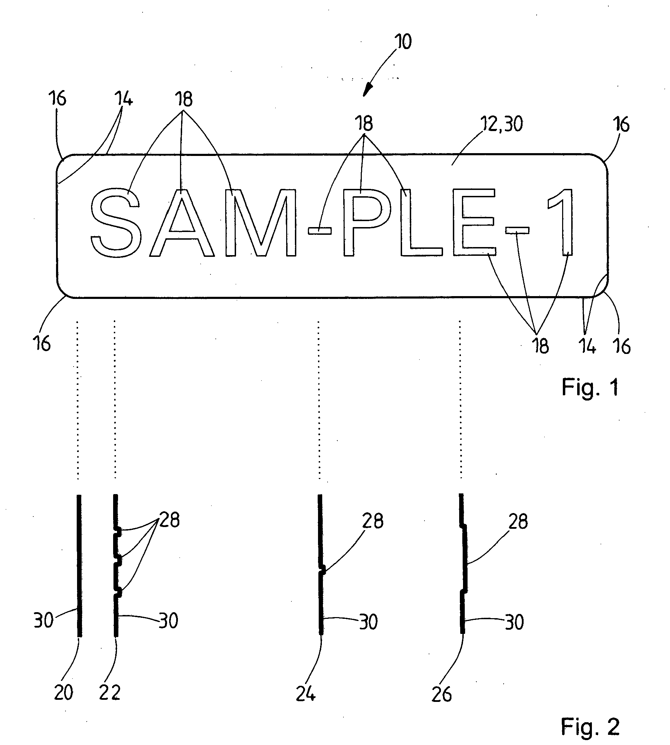

Beim hier dargestellten Ausführungsbeispiel wird eine Prägung der Grundplatte 12 vorgenommen. Das Prägen wird üblicherweise mit Hilfe geeigneter Prägestempel durchgeführt, die zu einer entsprechenden Verformung des Materials der Grundplatte 12 führen. Im Ausführungsbeispiel sind sie dazu vorgesehen, beispielhaft den Schriftzug "SAM-PLE-1" als dargestellte Symbole 18 auf dem Kennzeichen 10 einzuprägen. Im vorliegenden Fall sind die genannten Symbole 18 als aus der Zeichenebene nach oben hervortretende Bereiche in die Grundplatte 12 eingeprägt. Dies wird beispielhaft mit den in der Fig. 2 dargestellten Querschnitten 20, 22, 24 und 26 des Kennzeichens 10 verdeutlicht. Durch gepunktete Linien im Bereich zwischen den Fig. 1 und Fig. 2 soll die entsprechende Position der Querschnitte 20, 22, 24, 26 im entsprechenden Kennzeichen 10 veranschaulicht werden. Dementsprechend ist der Querschnitt 20 einem Bereich ohne Prägung eines Symbols 18 entnommen. Der Querschnitt 22 dagegen ist dem Bereich des Symbols "S" entsprechend mit drei erhabenen Abschnitten dargestellt. Die in der Fig. 2 jeweils auf der rechten Seite eines Querschnitts 20, 22, 24, 26 dargestellten Erhebungen 28 sind gegenüber der Grundplattenebene 30 dargestellt. Beim Querschnitt 24 ist lediglich der Bindestrich als Erhebung 28 zu sehen, während beim Querschnitt 26 der vertikal langgestreckte Bereich des Buchstabens "E" als Querschnitt des Symbols 18 zu betrachten ist.

In den Fig. 1 und 2 sind die Erhebungen 28 über der Grundplattenebene 30 bisher nur geprägt, während ein Farbauftrag in diesem Fall noch nicht erfolgt ist. Dementsprechend sind lediglich die umlaufenden Ränder beziehungsweise Kanten der entsprechenden Symbole 18 in der Fig. 1 als Umrandungen dargestellt.

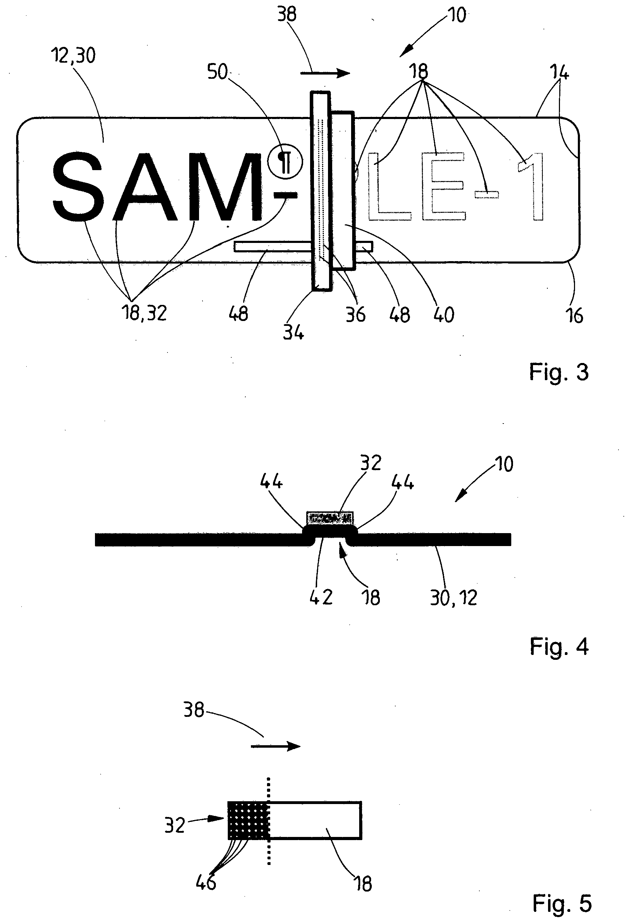

In der Fig. 3 ist ein Querschnitt eines zum Teil mit Farbe 32 versehenen Kennzeichens 10 dargestellt. Im rechten Bereich der Grundplatte 12 sind einige Symbole 18 ohne Einfärbung zu sehen, nämlich ein kleiner Teil des Buchstabens "P" und die Zeichen "LE-1". Auf der linken Seite des Kennzeichens sind dagegen bereits mit Farbe 32 versehene Symbole 18 in Form der Buchstabenkombination "SAM-" dargestellt. Der erfolgte Farbauftrag beziehungsweise die Farbe 32 sind hier durch die vollständige Einfärbung der Symbole 18 in der Zeichnung gezeigt.

Der Auftrag von Farbe 32 wird mittels einer Farbauftragsvorrichtung in Form eines Farbauftragskopfes 34 vorgenommen. Es können auch mehrere Teile des Farbauftragskopfes 34 und/oder ein beweglicher Schlitten vorgesehen sein. Dieser weist hierzu eine Vielzahl von Farbauftragselementen 36 auf, die sich über die gesamte Breite des Kennzeichens 10 erstrecken, hier in vertikaler Richtung. Die Farbauftragselemente 36 sind im vorliegenden Fall in zwei parallelen Reihen angeordnet, wobei andere Anordnungen und/oder bewegliche Elemente ohne Weiteres vorgesehen sein können. Zum Auftragen der Farbe 32 sind die Auftragselemente 36 im vorliegenden Fall als Farbdüsen ausgebildet, die kleine Farbportionen beziehungsweise Farbpartikel auf die Symbole 18 aufspritzen können. Die Farbauftragselemente 36 sind hierzu individuell und einzeln ansteuerbar, um gezielt einzelne Farbportionen 46 abgeben zu können.

Um das gesamte Kennzeichen 10 gezielt mit einem Farbauftrag versehen zu können, ist der Farbauftragskopf 34 in der Lage, sich relativ zum Kennzeichen 10 zu bewegen. Die Bewegungsrichtung 38 verläuft im vorliegenden Fall entlang der dargestellten Pfeils, also in der Zeichnung von links nach rechts. Dabei kann einerseits der Auftragskopf 34 fixiert sein und das Kennzeichen 10 relativ dazu nach links oder rechts, oben oder unten bewegt werden. Andererseits kann der Farbauftragskopf 34 entsprechend von links nach rechts, rechts nach links, oben nach unten, unten nach oben oder in beliebigen anderen Richtungen relativ zum Kennzeichen 10 über das feststehende Kennzeichen 10 verfahren werden. Die beiden Reihen Farbauftragselemente 36 sind hier entsprechend senkrecht zur Bewegungsrichtung 38 des Farbauftragskopfes 34 ausgerichtet. Auch eine Kombination verschiedener beweglicher Elemente oder verschiedener Bewegungen ist denkbar.

Die Information, an welchen Positionen beziehungsweise Stellen ein Farbauftrag auf das Kennzeichen 10 erfolgen soll, muss vor dem Auftragen von Farbe 32 entsprechend ermittelt werden. Hierzu ist eine Abtastvorrichtung 40 als Lesevorrichtung vorgesehen, die hier parallel zum Auftragskopf 34 angeordnet ist. Sie ist im vorliegenden Fall direkt mit dem Farbauftragskopf 34 verbunden. Die Abtastvorrichtung 40 kann vorzugsweise beispielsweise als eine eindimensionale Lesevorrichtung, insbesondere als Zeilenkamera, oder auch als zweidimensionale Lesevorrichtung, insbesondere zweidimensionale "Kamera", ausgestaltet sein. Ebenso kann auch eine dreidimensionale Lesevorrichtung, insbesondere eine "3-D-Kamera", verwendet werden. Mit der Abtastvorrichtung 40 werden bei einer Relativbewegung des Auftragskopfes 34 zusammen mit der Abtastvorrichtung 40 in Pfeilrichtung 38 zunächst die Topographiedaten des Kennzeichens 10 ermittelt, also das Höhenprofil der Grundplatte 12 mit den Symbolen 18.

Da diese Topographieermittlung bei der Bewegung von Auftragskopf 34 und Abtastvorrichtung 40 jeweils zeitlich vor dem Erreichen der Abtastposition durch den Auftragskopf 34 erfolgt, sind die notwendigen Informationen zur Topographie für eine entsprechende Steuerung der Farbauftragselemente 36 jeweils bekannt. Aufgrund des Abstands zwischen Auftragskopf 34 und Abtastvorrichtung 40 kann dann bei entsprechender Bewegung von Auftragskopf 34 und Abtastvorrichtung 40 relativ zum Kennzeichen 10 eine individuelle Steuerung der Farbauftragselemente 36 erfolgen. Auch ein vollflächiges Einlesen der Topographie ist grundsätzlich möglich. Alternativ kann auch eine Topographieermittlung aufgrund gespeicherter beziehungsweise berechneter Daten erfolgen.

Gemäß den ermittelten Topographieinformationen, also an welchen Stellen gegenüber der Grundplatte 12 erhabene Symbole 18 vorhanden sind, werden dann entsprechend die Farbauftragselemente 36 beim Überfahren der entsprechenden Symbolposition aktiviert. Somit wird lediglich dort Farbe 32 aufgetragen, wo eine Erhöhung eines Symbols 18 gegenüber der Grundplattenebene 30 ermittelt wurde. Die Symbole 18 werden damit präzise nur im Bereich der tatsächlich gegenüber der Grundplattenebene 30 erhabenen beziehungsweise vertieften Bereichen mit Farbe 32 versehen. Dies unterscheidet dieses Ausführungsbeispiel im Kern von einer vollflächigen Farbauftragsvorrichtung, die alternativ eingesetzt werden kann.

In der Fig. 4 ist beispielhaft ein zu bedruckendes Symbol 18 im Querschnitt der Grundplatte 12 dargestellt. Im Bereich des gegenüber der Grundplattenebene 30 erhabenen Symbols 18 ist hier bereits ein Farbauftrag erfolgt. Aufgrund der Verwendung von Topographieinformationen wird die Farbe 32 präzise nur im ebenen Plateauabschnitt 42 zwischen abfallenden Flanken 44 des Symbols 18 aufgebracht. Damit wird ein unsauberer Randbereich beziehungsweise ein Verschmieren im Bereich der Flanken 44 verhindert. Denkbar wäre auch eine definierte Überdruckung des ebenen Bereiches anhand festgelegter Kriterien, um den gewünschten Effekt eines optisch sauberen Farbauftrags zu erreichen.

Das Verfahren zum Aufbringen der Farbe 32 auf eines der Symbole 18 wird anhand von Fig. 5 näher erläutert.

Als Symbol 18 wurde hier ein Bindestrich "-" verwendet. Der Auftragskopf 34 ist in diesem Fall lediglich als eine Reihe Farbauftragselemente 36 gezeigt. Diese Farbauftragselemente 36 bewegen sich mit dem Auftragskopf 34 zusammen in Pfeilrichtung 38 relativ zum Symbol 18 von links nach rechts in der Zeichnung.

Die Farbauftragselemente 36 werden lediglich im Bereich der vorhandenen Erhebung des Symbols 18 in vertikaler Richtung aktiviert. Dadurch werden auch lediglich im Bereich des Symbols 18 entsprechende Farbportionen oder Farbtropfen 46 auf das Symbol 18 aufgebracht. Dies geschieht dadurch, dass während der Bewegung in Bewegungsrichtung 38 beispielsweise kontinuierlich oder in definierten Zeitabständen oder auch jeweils nach einer bestimmten zurückgelegten Strecke die entsprechenden einzelnen Farbauftragselemente 38 oberhalb des Symbols 18 aktiviert werden. Aufgrund der kontinuierlichen, vorzugsweise gleichförmigen Bewegung beziehungsweise der bewegungsangepassten Aktivierung werden damit die einzelnen Farbtropfen 46 in regelmäßigen Abständen oder kontinuierlich auf das Kennzeichen 10 aufgebracht. Im vorliegenden Beispiel ist zur Veranschaulichung ein geringer Abstand zwischen den einzelnen Farbtropfen 46 dargestellt. Im Falle einer ausreichend flüssigen Farbe 32 verlaufen die aufgebrachten Farbportionen 46 beziehungsweise Farbtropfen aber hinreichend stark ineinander, um den gesamten, mit einem Farbauftrag versehenen Bereich des Symbols 18 zu bedecken.

Alternativ können statt Farbportionen oder Farbtropfen 46 auch Materialportionen oder kann ein kontinuierlicher Materialstrahl oder Materialstrom zur Herstellung der Symbole 18 beziehungsweise eingesetzt werden. Dies kann auch den Farbauftrag darstellen, wenn eine entsprechende Farbgebung des Materials erfolgt.

Bei der Ermittlung der Topographie des Kennzeichens 10 gemäß Fig. 3 kann außerdem das Vorhandensein weiterer Elemente, wie beispielsweise eines Durchbruchs beziehungsweise einer Aussparung 48 oder auch größerer freier Bereiche ohne Symbole 18, festgestellt werden. Ein solcher Durchbruch 48 kann beispielsweise zur Aufnahme elektronischer Komponenten oder auch als Antenne für einen Funkchip, RFID-Chip oder Ähnlichem dienen. Diese Bereiche sind dementsprechend in der Regel nicht mit einem Farbauftrag zu versehen. In hinreichend großen freien Bereichen können dagegen zusätzliche visuell erfassbare Elemente platziert werden. Beispielsweise wurde in der Fig. 3 ein Emblem 50 in einen freien Bereich auf Höhe der Grundplattenebene 30 aufgebracht, mittels entsprechender Farbe 32 im Bereich der Erhebung beziehungsweise Vertiefung. Neben solchen Emblemen 50 oder Siegeln können auch andere Elemente, wie beispielsweise computerlesbare Strich- oder Punktcodes, aufgebracht werden.

Das erfindungsgemäße Verfahren funktioniert überblicksartig also wie folgt:
Die Topographie des Kennzeichens 10 wird zunächst ermittelt. Dazu werden die Topographiedaten anhand des Profils des Kennzeichens 10 und der Symbole 18 ermittelt. Hierzu ist eine Abtastvorrichtung 40 vorgesehen, die optische, mechanische oder auch akustische Effekte nutzt. Ergänzend können Informationen über die Topographie aus dem Herstellungsverfahren der Symbole bezogen werden. Anhand der ermittelten

Topographiedaten kann dann das gezielte Aufbringen der Farbe 32 erfolgen. Die Symbole 18 werden dazu anhand der ermittelten Topographiedaten analysiert, um zum Aufbringen von Farbe 32 genaue Informationen für die Positionierung der kleinen Farbportionen 46 auf die Symbole 18 zu erhalten. Ein Aufbringen findet dann in der Regel im Anschluss statt.

Das Kennzeichen 10 und/oder die im eigentlichen Sinn die Topographie bildenden Symbole 18 können durch ein 3D-Druckverfahren hergestellt werden. Auch die Farbe 32 kann durch ein 3D-Druckverfahren auf die Symbole 18 aufgebracht werden. In diesem Fall erfolgt statt eines reinen Farbauftrags ein Materialauftrag. Hierzu werden üblicherweise kontinuierliche Materialstrahlen oder auch Materialportionen verwendet. Diese werden dann schichtweise lokal aufgebracht. Um eine gute Erkennbarkeit des Kennzeichens zu gewährleisten, kann ein anderes oder zumindest andersfarbiges Material verwendet werden als bei der Grundplatte beziehungsweise den verdeckten Bereichen der Symbole.

Ein 3D-Druckverfahren zeichnet sich dadurch aus, dass eine punktweise, strichweise, schichtweise und/oder portionsweise Materialdeposition (oder alternativ auch Aushärtung beziehungsweise Entfernung) erfolgt. Eine mehrdimensionale, typischerweise dreidimensionale Steuerung und Bewegung eines sogenannten Druckkopfes erfolgt in einer Mehrachsen-Verschiebeeinrichtung. In der Regel wird ein rechtwinkliges Koordinatensystem mit x-y-z-Verschiebeeinheiten verwendet, alternativ aber auch in Kugelkoordinaten oder ähnlichem. Eine Computersteuerung sorgt für eine zuverlässige und reproduzierbare Steuerung der Druckkopfbewegung und damit der Materialdeposition. Somit lassen sich auch komplexe dreidimensionale Objekte fertigen.

Als Material zur Erstellung der Objekte werden typischerweise Kunststoffe verwendet. Diese lassen sich auf einfache Weise zur Verarbeitung aufschmelzen oder auch zur Deposition aushärten. Ein einziges Material oder mehrere Materialien, insbesondere verschieden eingefärbte Materialien lassen sich dabei durch mehrere Druckköpfe, Zuführungen oder auch durch einen Materialwechsel in einem Druckkopf verarbeiten. Die Materialien können als beispielsweise als Pulver, Flüssigkeit oder auch als Festkörper zugeführt werden, insbesondere als Stab oder Filament. Hierzu sind in der Regel Durchführungen, Düsen oder ähnliche Elemente vorgesehen. In der Regel wird eine schichtweise Arbeitsweise vorgesehen sein, wobei an allen gewünschten Stellen in einer Schicht entsprechend Material deponiert wird.

Die Grundplatte 12 kann als Rohling vorgefertigt sein oder auch durch 3D-Druck erzeugt werden. Die Symbole 18 können dann auf diese Grundplatte 12 aufgebracht werden. Dabei kann dasselbe Material wie das der Grundplatte 12 verwendet werden. Dann ist eine Einfärbung erforderlich, nach dem oben beschriebenen Verfahren einer Abtastung der Topographie. Gegebenenfalls kann auch ein anderes Material verwendet werden, um dessen besondere Eigenschaften auszunutzen. Ebenfalls kann ein Aufbringen von Farbe 32 durch eine andere Farbwahl des Materials beim 3D-Druck erfolgen. Dazu wird zumindest eine obere, sichtbare Schicht der Symbole 18 in einer anderen Farbe als die der Grundplatte 12 aufgebracht. Auch können die gesamten Symbole direkt durch 3D-Druck in der gewünschten Farbe aufgebracht werden.

Bei jeder der hier beschriebenen Verfahrensweisen kann eine Ermittlung der Topographie eines entsprechend vorgefertigten Kennzeichens 10 mit bereits aufgebrachten Symbolen 18 erforderlich sein, um die Farbe 32 und/oder wenigstens eine Materialschicht aufbringen zu können. Die verschiedenen Verfahren und Verfahrensschritte sind damit entsprechend miteinander kombinierbar. Insbesondere kann ein 3D-Druckverfahren gezielt nach Ermittlung der Topographie zur Aufbringung einer anders eingefärbten Materialschicht auf vorhandene Symbole verwendet werden.

### Bezugszeichenliste

- 10: Kennzeichen
- 12: Grundplatte
- 14: Rand
- 16: Eckbereich
- 18: Symbol
- 20: Querschnitt
- 22: Querschnitt
- 24: Querschnitt
- 26: Querschnitt
- 28: Erhebung
- 30: Grundplattenebene
- 32: Farbe
- 34: Farbauftragskopf
- 36: Farbauftragselement
- 38: Bewegungsrichtung
- 40: Abtastvorrichtung
- 42: Plateauabschnitt
- 44: Flanke
- 46: Farbportion
- 48: Aussparung
- 50: Emblem

## Patentansprüche

1. Verfahren zum Herstellen eines Kennzeichens (10), vorzugsweise Fahrzeugkennzeichens, mit einer Grundplatte (12) mit wenigstens einem aus einer Grundplattenebene (30) herausragenden, insbesondere gegenüber der Grundplatte (12) erhabenen und/oder vertieften Symbol (18), wobei gegebenenfalls wenigstens eine Farbe (32) beziehungsweise ein Farbstoff als Farbauftrag auf das wenigstens eine Symbol (18) aufgebracht beziehungsweise aufgetragen wird, **dadurch gekennzeichnet, dass** das wenigstens eine Symbol (18) und/oder der Farbauftrag auf dem wenigstens einen Symbol (18) aus wenigstens einer Farbportion (46) und/oder Materialportion gebildet wird und die Topographie des wenigstens einen Symbols (18) des Kennzeichens (10) für einen gezielten Farbauftrag für einen nachfolgenden und/oder sofortigen Farbauftrag ermittelt wird, wobei der Farbauftrag nach dem zumindest teilweisen Ermitteln der Topographie erfolgt und wobei das Kennzeichen (10) beziehungsweise das wenigstens eine Symbol (18) zur Ermittlung der Topographie mittels einer Abtastvorrichtung (40) abgetastet wird.

2. Verfahren nach Anspruch 1, **dadurch gekennzeichnet, dass** das Symbol und/oder der Farbauftrag aus einer Vielzahl kleiner Farbportionen (46) und/oder Materialportionen und/oder einem kontinuierlichen Materialstrahl als Materialportion gebildet wird.

3. Verfahren nach Anspruch 1 oder 2, **dadurch gekennzeichnet, dass** die Farbe in zumindest nahezu punktförmigen Farbportionen (46), insbesondere Farbpunkten und/oder Farbspritzern und/oder Farbstrahlen, aufgetragen wird, vorzugsweise punktweise und/oder streifenweise und/oder (punkt-)matrixweise und/oder bereichsweise.

4. Verfahren nach einem der vorhergehenden Ansprüche, **dadurch gekennzeichnet, dass** die wenigstens eine Farbe durch wenigstens ein Farbauftragselement (36), bevorzugt mehrere Farbauftragselemente (36), weiter bevorzugt eine Vielzahl Farbauftragselemente (36) aufgebracht wird, wobei mehrere Farbauftragselemente (36) bevorzugt in wenigstens einer Reihe, einer Matrix und/oder einem Feld (Array) an einem Farbauftragskopf (34) angeordnet sind und/oder wobei als Farbauftragselemente (36) insbesondere Farbdüsen, Farbnadeln, Heizelemente, Farbstempel, Druckelemente und/oder ähnliches verwendet werden und/oder wobei der Farbauftrag vorzugsweise durch Besprühen, Bedrucken, Bestrahlen, Betropfen, chemische Reaktion, Hitze, Heißprägung und/oder Bekleben erfolgt.

5. Verfahren nach einem der vorhergehenden Ansprüche, **dadurch gekennzeichnet, dass** die Topographie des wenigstens einen Symbols (18) durch Berechnung aus insbesondere gespeicherten und/oder gemessenen Symboldaten ermittelt wird, vorzugsweise aus bereits für einen Herstellungsvorgang des Kennzeichens (10) verwendeten Symboldaten, wie insbesondere einem Prägevorgang und/oder einem Aufbringvorgang.

6. Verfahren nach einem der vorhergehenden Ansprüche, **dadurch gekennzeichnet, dass** das Kennzeichen (10) mittels wenigstens eines Anschlagmittels relativ zum Farbauftragskopf (34) positioniert und/oder ausgerichtet wird, wobei der Farbauftrag vorzugsweise aufgrund vorher bestimmter und/oder gespeicherten Topographiedaten der Symbole (18) erfolgt.

7. Verfahren nach einem der vorhergehenden Ansprüche, **dadurch gekennzeichnet, dass** das Kennzeichen (10) beziehungsweise das wenigstens eine Symbol (18) zur Ermittlung der Topographie mittels einer mechanischen, optischen und/oder akustischen Abtastvorrichtung (40), bevorzugt mittels Kamera, Laser, Ultraschall, Mikrowellen, Distanzmessung, Profilmessung, Höhenmessung und/oder mechanischem Tastkopf abgetastet wird.

8. Verfahren nach einem der vorhergehenden Ansprüche, **dadurch gekennzeichnet, dass** die Farbe (32) aufgrund der ermittelten Topographiedaten nur lokal auf ausgewählte Bereiche der Symbole (18), insbesondere auf aus der Grundplattenebene (30) herausragende, vorzugsweise erhabene und/oder zurückspringende Bereiche, aufgebracht wird.

9. Verfahren nach einem der vorhergehenden Ansprüche, **dadurch gekennzeichnet, dass** freie Bereiche und/oder Aussparungen (48) im Kennzeichen (10), beispielsweise als Freiflächen und/oder zum Aufbringen strukturierter Elemente, insbesondere Siegel, und/oder zum Einsetzen von (RFID-)Chips und/oder als Antennen, bei der Ermittlung der Topographie ermittelt und/oder erkannt werden und/oder zuvor bekannt sind.

10. Verfahren nach einem der vorhergehenden Ansprüche, **dadurch gekennzeichnet, dass** der Farbauftragskopf (34) und/oder die Abtastvorrichtung (40) relativ zum Kennzeichen (10) bewegt wird/werden zur Topographieermittlung und/oder zum Farbauftrag, oder dass das Kennzeichen (10) relativ zum Farbauftragskopf (34) zwecks Farbauftrags und/oder zur Abtastvorrichtung (40) zwecks Topographieermittlung bewegt wird.

11. Verfahren nach einem der vorhergehenden Ansprüche, **dadurch gekennzeichnet, dass** eine aushärtbare und/oder trocknungsfähige Farbe (32) mittels eines Aushärtevorgangs ausgehärtet und/oder eines Trocknungsvorgangs getrocknet wird, insbesondere durch (UV-)Bestrahlung und/oder Beheizung und/oder chemische und/oder physikalische Reaktion.

12. Verfahren nach einem der vorhergehenden Ansprüche, **dadurch gekennzeichnet, dass** die Grundplatte (12) und/oder das wenigstens eine Symbol (18) durch mehrdimensionalen Materialauftrag hergestellt wird und/oder der Materialauftrag portionsweise und/oder kontinuierlich erfolgt, vorzugsweise in Form einer Vielzahl von Materialportionen und/oder wenigstens einem kontinuierlichen Materialstrang.

13. Verfahren nach einem der vorhergehenden Ansprüche, **dadurch gekennzeichnet, dass** das wenigstens eine Symbol zumindest bereichsweise aus Material, bevorzugt Kunststoffmaterial, einer anderen Farbe hergestellt wird als ein anderer Bereich des wenigstens einen Symbols und/oder der Grundplatte (12), vorzugsweise wenigstens eine Schicht des wenigstens einen Symbols, besonders bevorzugt dessen äußere beziehungsweise oberste Schicht.

## Claims

1. Method for producing an identifier (10), preferably a vehicle registration plate, having a base plate (12) with at least one symbol (18) projecting out of the base plate plane (30), in particular elevated and/or depressed with respect to the base plate (12), if appropriate at least one colour (32) or a coloured material being applied or attached to the at least one symbol (18) as a colour application, **characterized in that** the at least one symbol (18) and/or the colour application on the at least one symbol (18) is formed from at least one colour portion (46) and/or material portion, and the topography of the at least one symbol (18) of the identifier (10) is determined for a specific colour application for a subsequent and/or immediate colour application, wherein the colour application is carried out following the at least partial determination of the topography, and wherein the identifier (10) or the at least one symbol (18) is scanned by means of a scanning device (40) in order to determine the topography.

2. Method according to Claim 1, **characterised in that** the symbol and/or the colour application is formed from a multiplicity of small colour portions (46) and/or material portions and/or a continuous material jet as material portion.

3. Method according to Claim 1 or 2, **characterized in that** the colour is applied in at least virtually point-like colour portions (46), in particular coloured dots and/or colour sprays and/or colour jets, preferably point by point and/or strip by strip and/or (dot) matrix-wise and/or region by region.

4. Method according to one of the preceding claims, **characterized in that** the at least one colour is applied by at least one colour application element (36), in particular a plurality of colour application elements (36), more preferably a multiplicity of colour application elements (36), wherein a plurality of colour application elements (36) are preferably arranged in at least one row, a matrix and/or an array on a colour application head (34) and/or wherein in particular, nozzles, needles, heating elements, colour punches, printing elements and/or the like are used as colour application elements (36), and/or wherein the colour application is preferably carried out by spraying, printing, irradiating, dripping, chemical redaction, heat, hot embossing and/or adhesive bonding.

5. Method according to one of the preceding claims, **characterized in that** the topography of the at least one symbol (18) is determined by calculation from in particular stored and/or measured symbol data, preferably from symbol data already used for a production operation of the identifier (10), such as in particular an embossing operation and/or an application operation.

6. Method according to one of the preceding claims, **characterized in that** the identifier (10) is positioned and/or aligned relative to the colour application head (34) by means of at least one stop means, wherein the colour application is preferably carried out on the basis of previously determined and/or stored topography data of the symbols (18).

7. Method according to one of the preceding claims, **characterized in that** in order to determine the topography, the identifier (10) or the at least one symbol (18) is scanned by means of a mechanical, optical and/or acoustic scanning device (40), preferably by means of a camera, laser, ultrasound, microwaves, distance measurement, profile measurement, height measurement and/or a mechanical sensor.

8. Method according to one of the preceding claims, **characterized in that** the colour (32) is applied only locally to selected regions of the symbols (18) on the basis of the determined topography data, in particular to regions projecting from the base plate plane (30), preferably elevated and/or recessed.

9. Method according to one of the preceding claims, **characterised in that** free regions and/or cut-outs (48) in the identifier (10), for example elements, in particular seals, structured as free surfaces and/or for application and/or for the insertion of (RFID) chips and/or as antennas are determined and/or detected during the determination of the topography and/or previously known.

10. Method according to one of the preceding claims, **characterised in that** the colour application head (34) and/or the scanning device (40) is/are moved relative to the identifier (10) for the topography determination and/or for the colour application, or **in that** the identifier (10) is moved relative to the colour application head (34) for the purpose of colour application and/or relative to the scanning device (40) for the purpose of topography determination.

11. Method according to one of the preceding claims, **characterized in that** a colour (32), which can be cured and/or is capable of drying, is cured by means of a curing operation and/or dried by means of a drying operation, in particular by (UV) irradiation and/or heating and/or chemical and/or physical reaction.

12. Method according to one of the preceding claims, **characterized in that** the base plate (12) and/or the at least one symbol (18) is produced by multidimensional material application, and/or the material application is carried out portion by portion and/or continuously, preferably in the form of a multiplicity of material portions and/or at least one continuous material strand.

13. Method according to one of the preceding claims, **characterized in that** at least some regions of the at least one symbol are produced from material, preferably plastic material, of a different colour from another region of the at least one symbol and/or the base plate (12), preferably at least one layer of the at least one symbol, particularly preferably its outer or uppermost layer.

## Revendications

1. Procédé de fabrication d'une plaque d'immatriculation (10), de préférence d'une plaque d'immatriculation de véhicule, comprenant une plaque de base (12) qui comporte au moins un symbole (18) faisant saillie par rapport à un plan (30) de plaque de base, en particulier en relief et/ou en creux par rapport à la plaque de base (12), dans lequel au moins une peinture (32) ou, selon le cas, un colorant est appliqué ou déposé sous forme d'un dépôt de peinture sur l'au moins un symbole (18), **caractérisé en ce que** l'au moins un symbole (18) et/ou le dépôt de peinture est formé sur l'au moins un symbole (18) à partir d'au moins une partie de la peinture (46) et/ou une partie du matériau et **en ce que** la topographie de l'au moins un symbole (18) de la plaque d'immatriculation (10) est déterminée pour un dépôt de peinture spécifique destiné à un dépôt de peinture ultérieur et/ou immédiat, dans lequel le dépôt de peinture est effectué après la détermination au moins partielle de la topographie et dans lequel la plaque d'immatriculation (10) ou l'au moins un symbole (18) est balayé au moyen d'un dispositif de balayage (40) pour déterminer la topographie.

2. Procédé selon la revendication 1, **caractérisé en ce que** le symbole et/ou le dépôt de peinture est formé à partir d'une pluralité de petites parties de peinture (46) et/ou parties de matériau et/ou d'un jet de matériau continu en tant que partie de matériau.

3. Procédé selon la revendication 1 ou 2, **caractérisé en ce que** la peinture est appliquée dans au moins des parties de peinture (46) pratiquement ponctuelles, en particulier des points colorés et/ou des projections de peinture et/ou des jets de peinture, de préférence sous forme de points et/ou sous forme de bandes et/ou sous forme de matrice (de points) et/ou par régions.

4. Procédé selon l'une des revendications précédentes, **caractérisé en ce que** l'au moins une peinture est appliquée par au moins un élément d'application de peinture (36), de préférence plusieurs éléments d'application de peinture (36), de manière préférentielle une pluralité d'éléments d'application de peinture (36), dans lequel plusieurs éléments d'application de peinture (36) sont de préférence disposés dans au moins une rangée, une matrice et/ou un champ (réseau) sur une tête d'application de peinture (34), et/ou dans lequel des buses de peinture, des pointeaux de peinture, des éléments chauffants, des tampons de peinture, des éléments d'impression et/ou autres, sont en particulier utilisés en tant qu'éléments d'application de peinture (36) et/ou dans lequel l'application de peinture est de préférence effectuée par pulvérisation, impression, irradiation, éjection de gouttes, réaction chimique, chaleur, gaufrage à chaud et/ou collage.

5. Procédé selon l'une des revendications précédentes, **caractérisé en ce que** la topographie de l'au moins un symbole (18) est déterminée par calcul, en particulier, à partir de données de symboles mémorisées et/ou mesurées, de préférence à partir de données de symboles déjà utilisées pour un processus de fabrication de la plaque d'immatriculation (10), en particulier tel qu'un processus de gaufrage et/ou un processus de dépôt.

6. Procédé selon l'une des revendications précédentes, **caractérisé en ce que** la plaque d'immatriculation (10) est positionnée et/ou alignée par rapport à la tête d'application de peinture (34) par au moins un moyen de butée, dans lequel l'application de peinture est de préférence effectuée sur la base de données topographiques préalablement déterminées et/ou mémorisées des symboles (18).

7. Procédé selon l'une des revendications précédentes, **caractérisé en ce que**, pour déterminer la topographie, la plaque d'immatriculation (10) ou l'au moins un symbole (18) est balayé au moyen d'un dispositif de balayage mécanique, optique et/ou acoustique (40), de préférence au moyen d'une caméra, d'un laser, d'ultrasons, de micro-ondes, d'une mesure de distance, d'une mesure de profil, d'une mesure de hauteur et/ou d'une tête de balayage mécanique.

8. Procédé selon l'une des revendications précédentes, **caractérisé en ce que** la peinture (32) n'est appliquée que localement, sur la base des données topographiques déterminées, sur des zones sélectionnées des symboles (18), en particulier sur des zones faisant saillie par rapport au plan de la plaque de base (30), de préférence en relief et/ou en creux.

9. Procédé selon l'une des revendications précédentes, **caractérisé en ce que** des régions libres et/ou des évidements (48) dans la plaque d'immatriculation (10), par exemple sous la forme de régions ouvertes et/ou pour l'application d'éléments structurés, en particulier de sceaux, et/ou pour l'insertion de puces (RFID) et/ou sous la forme d'antennes, sont déterminés et/ou reconnus et/ou connus antérieurement lors de la détermination de la topographie.

10. Procédé selon l'une des revendications précédentes, **caractérisé en ce que** la tête d'application de peinture (34) et/ou le dispositif de balayage (40) est ou sont déplacés par rapport à la plaque d'immatriculation (10) pour déterminer la topographie et/ou pour le dépôt de peinture, ou **en ce que** la plaque d'immatriculation (10) est déplacée par rapport à la tête d'application de peinture (34) pour appliquer la peinture et/ou par rapport au dispositif de balayage (40) pour déterminer la topographie.

11. Procédé selon l'une des revendications précédentes, **caractérisé en ce qu'**une peinture (32) durcissable et/ou séchable est durcie au moyen d'un processus de durcissement et/ou d'un processus de séchage, en particulier par irradiation (UV) et/ou chauffage et/ou réaction chimique et/ou physique.

12. Procédé selon l'une des revendications précédentes, **caractérisé en ce que** la plaque de base (12) et/ou l'au moins un symbole (18) est réalisé par application multidimensionnelle de matériau et/ou **en ce que** l'application de matériau est réalisée par portions et/ou en continu, de préférence sous la forme d'une pluralité de portions de matériau et/ou d'au moins un cordon de matériau continu.

13. Procédé selon l'une des revendications précédentes, **caractérisé en ce que** l'au moins un symbole est réalisé au moins en partie à partir d'un matériau, de préférence une matière plastique, ayant une couleur différente d'une autre région de l'au moins un symbole et/ou de la plaque de base (12), de préférence au moins une couche de l'au moins un symbole, et de manière particulièrement préférable, sa couche extérieure ou supérieure.
